# FASCICULE DE BREVET EUROPEEN

(11) **EP 1 677 046 B1**
(45) Date de publication et mention de la délivrance du brevet: **27.02.2008**
(21) Numéro de dépôt: 05292807.4
(22) Date de dépôt: 27.12.2005
(51) Int. Cl.: F21V 7/00, B60Q 3/02

(54) **Dispositif d'éclairage intérieur d'un habitacle d'un véhicule automobile, à répartition de flux lumineux**
Kfz-Innenraumbeleuchtungsvorrichtung mit Lichtverteilung
Vehicle interior lighting device with light distribution

(30) Priorité: 31.12.2004 FR 0414123
(43) Date de publication de la demande: 05.07.2006
(73) Titulaire: PEUGEOT CITROËN AUTOMOBILES S.A., 78140 Velizy Villacoublay (FR); Hella KGaA Hueck & Co., 59552 Lippstadt (DE)
(72) Inventeur: Barre, Philippe, 94340 Joinville le Pont (FR); Bonfils, Xavier, 51100 Reims (FR); Serres, David, 51420 Witry les Reims (FR); Tarallo, Jean-Michel, 75016 Paris (FR); Mueller, Bernd, 79650 Schopfheim (DE); Schoene, Heiko, 79677 Schönau (DE); Zwick, Hubert, 70173 Stuttgart (DE)
(74) Mandataire: Lagrange, Jacques Etienne M.M.

(56) Documents cités:
- DE-U1- 20 000 644
- FR-A- 2 107 192
- FR-A- 2 815 696
- US-A- 2 232 276

## Description

L'invention concerne un dispositif d'éclairage intérieur d'un habitacle d'un véhicule automobile, à répartition de flux lumineux.

Les véhicules automobiles comportent généralement un habitacle qui est délimité par des parties de carrosserie du véhicule et en particulier par des parties de carrosserie ayant une disposition sensiblement verticale délimitant latéralement l'habitacle du véhicule. De telles parties de carrosserie peuvent être des parties mobiles telles que des portes ou des parties fixes, par exemple des montants latéraux de l'habitacle.

L'habitacle d'un véhicule automobile doit comporter des moyens d'éclairage intérieur qui permettent de réaliser différentes fonctions. En particulier, il est nécessaire de disposer de moyens d'éclairage ayant une intensité suffisante pour permettre au conducteur du véhicule ou à des passagers d'examiner avec attention des objets ou des documents et en particulier de lire des documents pendant des arrêts du véhicule automobile. Un tel éclairage est généralement désigné comme éclairage de lecture à l'intérieur du véhicule automobile.

Il est également nécessaire de disposer de moyens permettant au conducteur ou aux passagers du véhicule automobile d'accéder facilement au poste de conduite ou à un siège de passager après ouverture d'une porte du véhicule. De tels moyens permettent habituellement d'éclairer le côté latéral du véhicule automobile par lequel le conducteur ou le passager pénètre dans le véhicule automobile, en particulier au niveau du plancher de l'habitacle, ainsi qu'au moins une partie du siège qui doit être occupé par le conducteur ou le passager. Un tel moyen d'éclairage est généralement appelé éclairage d'accueil.

On a proposé de disposer des moyens d'éclairage intérieur de l'habitacle, sur les parois latérales délimitant l'habitacle, par exemple les portes du véhicule ou à l'intérieur de ces parois, dans des logements ayant une ouverture assurant le passage d'un flux lumineux vers un espace éclairé de l'habitacle.

De tels logements renfermant un moyen d'éclairage peuvent être disposés par exemple à mi-hauteur de l'habitacle, dans la partie supérieure des panneaux de portes, en dessous d'une vitre latérale du véhicule.

Les moyens d'éclairage disposés sur ou à l'intérieur des parois latérales du véhicule comportent généralement une source lumineuse et une surface réfléchissante permettant de renvoyer un faisceau lumineux émis par la source vers le bas, dans un espace éclairé de dimensions voulues. De tels dispositifs sont connus par exemple de DE 200 00 644 U1.

De manière générale, on peut utiliser, comme éclairage intérieur d'un véhicule automobile, une source lumineuse et une surface réfléchissante placées en un point quelconque de l'habitacle du véhicule automobile pour éclairer un espace s'étendant dans la direction longitudinale et dans la direction transversale du véhicule automobile.

Un inconvénient d'un tel dispositif est qu'il assure un éclairage intense d'une zone de l'habitacle située à la verticale de la source lumineuse et un éclairage plus faible des parties de l'habitacle éloignées de la zone située à la verticale de la source lumineuse. Il en résulte un éclairage peu homogène de l'habitacle qui peut être gênant pour les utilisateurs.

Le but de l'invention est donc de proposer un dispositif d'éclairage intérieur d'un habitacle d'un véhicule automobile à répartition de flux lumineux, comportant au moins une source lumineuse et au moins un moyen de réflexion d'au moins un faisceau émis par la source vers un espace éclairé de l'habitacle s'étendant suivant la direction longitudinale et la direction transversale du véhicule automobile d'un côté au moins d'une zone de l'habitacle à la verticale de la source lumineuse, qui permette d'obtenir un éclairage sensiblement homogène et constant dans toutes les parties de l'espace éclairé de l'habitacle.

Dans ce but, le moyen de réflexion comporte au moins une surface réfléchissante de forme courbe dirigée vers la source lumineuse disposée par rapport à la source lumineuse et orientée, de manière que le faisceau réfléchi transmette un premier flux lumineux dans une première partie de l'espace éclairé de l'habitacle proche de la zone située à la verticale de l'habitacle et un second flux lumineux plus intense que le premier, dans une seconde partie de l'espace éclairé de l'habitacle éloignée de la zone à la verticale de la source lumineuse.

Selon des caractéristiques plus particulières qui peuvent être prises isolément ou en combinaison :
- le dispositif d'éclairage placé sensiblement à mi-hauteur de l'habitacle sur ou à l'intérieur d'une paroi latérale de l'habitacle comporte un premier réflecteur disposé au-dessus de la source et un second réflecteur situé en dessous de la source assurant l'émission d'un faisceau lumineux ayant un axe sensiblement horizontal, le premier réflecteur et le second réflecteur ayant des surfaces réfléchissantes respectives destinées à intercepter le faisceau lumineux émis par la source disposées et orientées de manière à transmettre, dans une première direction générale peu inclinée par rapport à l'horizontale, le premier flux lumineux) et, dans une seconde direction générale plus inclinée par rapport à l'horizontale, le second flux lumineux, le second flux lumineux ayant une intensité lumineuse supérieure au premier flux lumineux ;
- le premier réflecteur ayant une surface réfléchissante courbe est disposé par rapport à la source et orienté de manière à produire un premier et un second faisceaux lumineux réfléchis, le second faisceau lumineux réfléchi ayant une inclinaison faible par rapport à l'horizontale et transmettant un flux lumineux intense, et le premier faisceau réfléchi ayant une inclinaison plus forte par rapport à l'horizontale que le second faisceau réfléchi et transmettant un flux lumineux moins intense que le second faisceau réfléchi, et le second réflecteur présente une surface réfléchissante disposée par rapport à la source et orientée de manière à produire un faisceau réfléchi ayant une faible inclinaison par rapport à l'horizontale ;
- le premier réflecteur est disposé au-dessus de la source lumineuse et le second réflecteur en dessous de la source lumineuse ;
- la surface réfléchissante du premier réflecteur présente des sections courbes et la seconde surface réfléchissante du second réflecteur des génératrices droites, dans des plans passant par l'axe du faisceau émis par la source ;
- la surface réfléchissante du premier réflecteur et la surface réfléchissante du second réflecteur présentent des sections courbes dans des plans perpendiculaires à l'axe du faisceau émis par la source.

Afin de bien faire comprendre l'invention, on va maintenant décrire, à titre d'exemple, en se référant aux figures jointes en annexe, un dispositif d'éclairage intérieur d'un véhicule automobile suivant l'invention.

La figure 1 est une vue en perspective latérale partielle de l'habitacle d'un véhicule automobile comportant un dispositif d'éclairage intérieur suivant l'invention.

La figure 2 est une vue schématique, dans la direction longitudinale du véhicule automobile, d'une partie de l'habitacle et du dispositif d'éclairage.

La figure 3 est une vue en perspective du dispositif d'éclairage suivant l'invention.

La figure 4 est une vue en coupe transversale du dispositif d'éclairage suivant l'invention assurant la répartition du flux lumineux de la source dans l'habitacle.

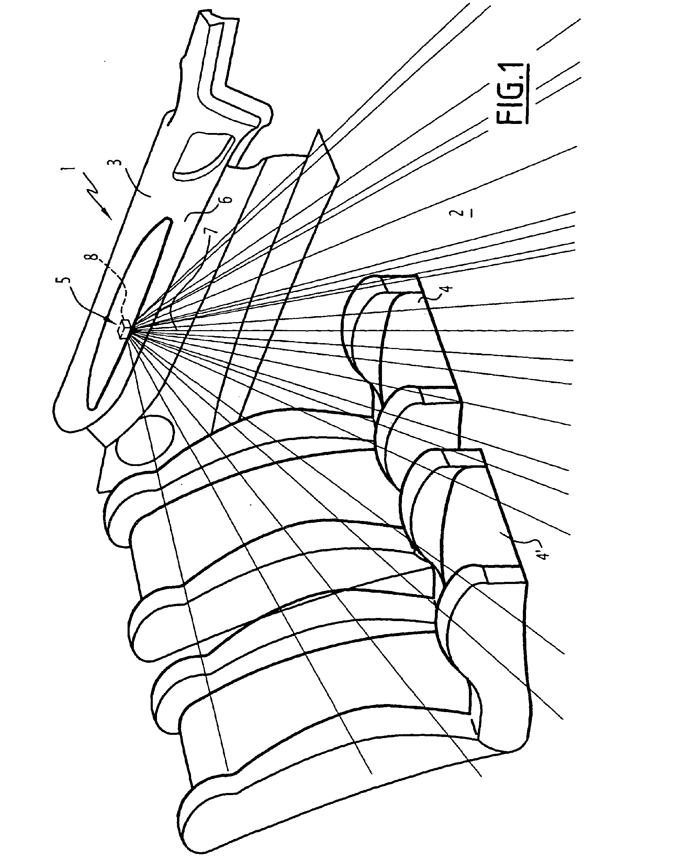

Sur la figure 1, on a représenté une partie de l'habitacle 2 d'un véhicule automobile 1 qui est délimité sur l'un de ses côtés par une paroi latérale verticale 3 qui est une porte avant du véhicule automobile. Dans l'habitacle 2 sont disposés des sièges 4 et 4' pour des utilisateurs du véhicule automobile.

Le dispositif d'éclairage intérieur du véhicule automobile comporte un dispositif d'éclairage 5 suivant l'invention disposé dans la garniture interne 6 de la porte 3, à l'intérieur d'une cavité ayant une ouverture à sa partie inférieure permettant le passage d'un faisceau d'éclairage 7 vers l'habitacle 2.

De préférence, la garniture interne 6 de la porte 3 est réalisée, comme décrit dans une demande de brevet déposée le même jour que la présente demande. Une portion 8 de la paroi de la garniture 6 s'étendant suivant la longueur de la porte 3 et sur une partie de la hauteur de la garniture 6 est inclinée par rapport au plan vertical de la garniture 6 vers le bas et vers l'intérieur de l'habitacle 2, de manière à présenter la forme d'une visière sous laquelle est délimitée la cavité renfermant le dispositif d'éclairage 5. La portion inclinée 8 de la paroi de la garniture 6 est délimitée, à sa partie inférieure, par un bord courbe situé dans un plan sensiblement horizontal. L'ouverture de la cavité par laquelle passe le faisceau lumineux 7 est ménagée entre le bord courbe inférieur de la portion inclinée 8 de la paroi de la garniture 6 et le plan vertical de la garniture. De manière à protéger le dispositif d'éclairage 5, une plaque transparente est placée suivant l'ouverture de la cavité, dans un plan horizontal.

Comme il sera expliqué plus loin, le dispositif d'éclairage 5 comporte une source lumineuse et des moyens réfléchissants permettant de diriger le faisceau lumineux de la source vers le bas à travers la plaque transparente placée dans l'ouverture de la cavité servant de logement au dispositif d'éclairage 5. La source lumineuse et les moyens réfléchissants sont réalisés et disposés de manière que le faisceau lumineux 7 d'éclairage de l'intérieur de l'habitacle du véhicule automobile ait une très grande amplitude (pratiquement 180°) dans un plan horizontal, de manière que l'espace éclairé de l'habitacle s'étende sur une grande longueur dans la direction longitudinale du véhicule automobile.

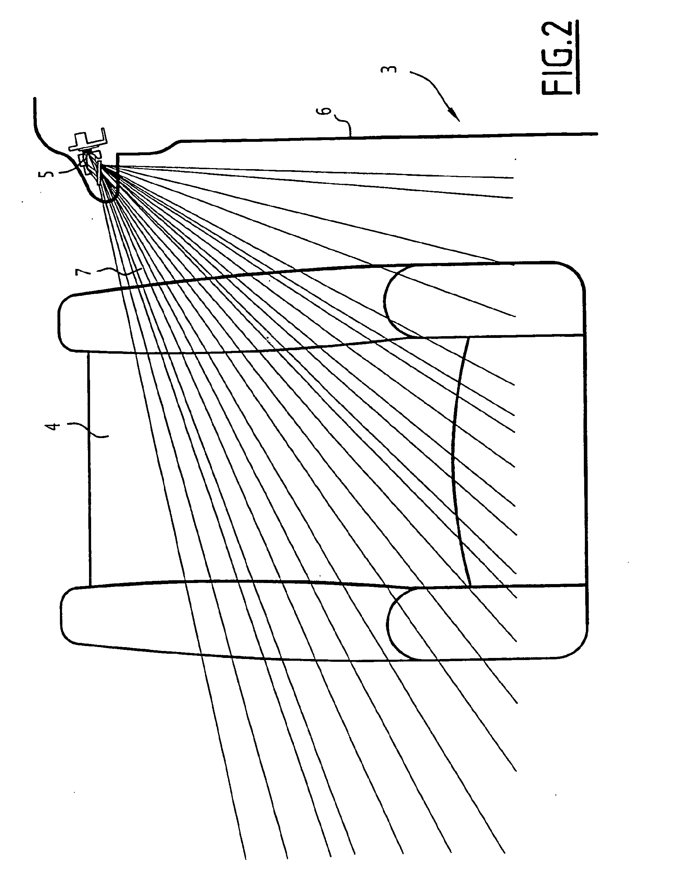

Comme il est visible sur la figure 2, le faisceau 7 présente, dans un plan vertical de direction transversale, une amplitude peu inférieure à 90°, de manière que l'espace éclairé de l'habitacle s'étende dans la direction transversale depuis le plan vertical de la garniture 6 de la porte 3 et présente une surface supérieure légèrement inclinée vers le bas par rapport à un plan horizontal passant par l'axe du faisceau 7.

De cette manière, on assure un éclairage satisfaisant de l'habitacle, en dessous du niveau des yeux d'un utilisateur du siège 4 du véhicule automobile dont le dossier a été représenté sur la figure 2.

On obtient ainsi un éclairage, en particulier de lecture, tout à fait efficace, sans risque d'éblouissement des utilisateurs du véhicule automobile.

De plus, comme il sera expliqué plus loin, le dispositif suivant l'invention permet d'obtenir un éclairage homogène dans tout l'espace éclairé de l'habitacle 2 du véhicule automobile s'étendant dans la direction transversale et dans la direction longitudinale du véhicule automobile 1, avec une intensité lumineuse sensiblement constante.

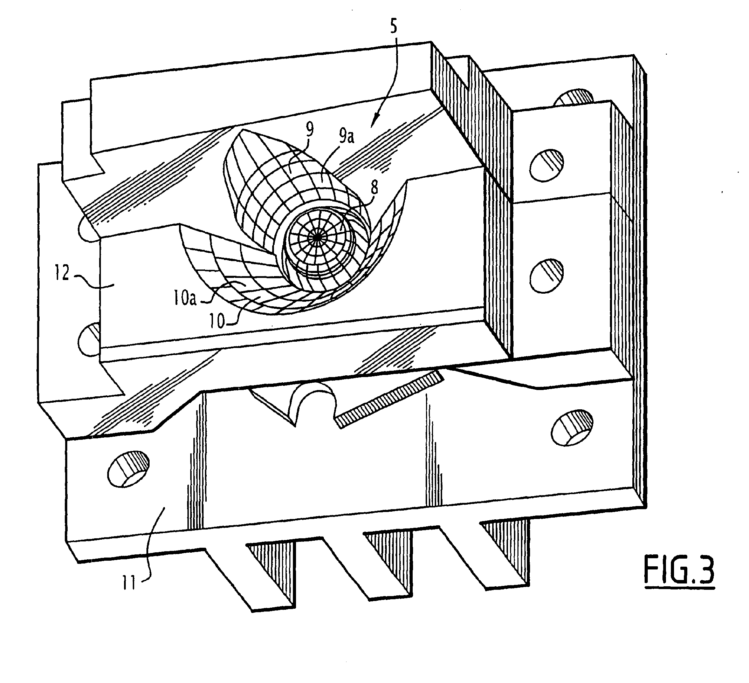

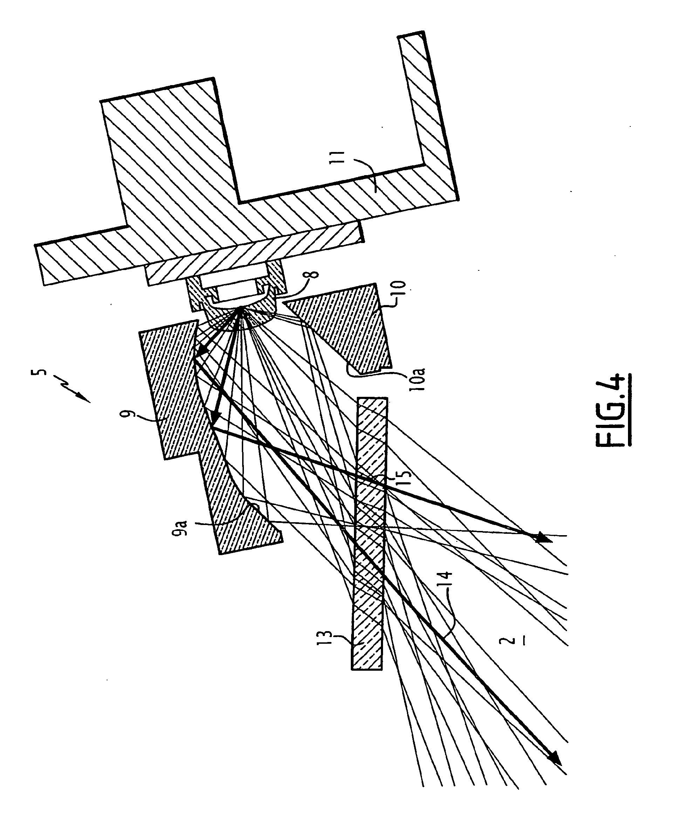

Comme il est visible sur les figures 3 et 4, le dispositif d'éclairage 5 suivant l'invention comporte une source lumineuse 8, un réflecteur supérieur 9 et un réflecteur inférieur 10 fixés sur un ensemble de support rendu solidaire d'une partie interne de la garniture 6. L'ensemble de support comporte un support refroidisseur 11 ou radiateur sur lequel est fixée la source lumineuse 8 et un support 12 des réflecteurs 9 et 10.

Le radiateur 11 est réalisé en un métal bon conducteur de la chaleur, tel que l'aluminium et comporte des ailetages de refroidissement, de telle sorte que la source lumineuse 8 en contact avec le radiateur 11 soit refroidie efficacement pendant l'utilisation du dispositif d'éclairage.

De préférence, la source lumineuse 8 est constituée par une diode émettrice de lumière (LED) associée à un élément luminescent et de diffusion de la lumière.

La source lumineuse peut être constituée en particulier par un dispositif Luxeon (marque déposée de la société Lumileds).

Un tel moyen d'éclairage présente des avantages substantiels par rapport à une ampoule à incandescence.

A puissance et intensité lumineuse égales, un tel dispositif à diode présente un encombrement très sensiblement inférieur à une ampoule et produit moins de chaleur.

Les réflecteurs 9 et 10 présentent des surfaces réfléchissantes respectives 9a et 10a dirigées vers la zone d'émission d'un faisceau lumineux par la source lumineuse 8, de part et d'autre du faisceau émis, au-dessus et en dessous de la source 8.

Le réflecteur 9 disposé au-dessus de la source 8 comporte une surface réfléchissante 9a ayant des génératrices courbes dans les plans verticaux aussi bien longitudinaux que transversaux. Le réflecteur 10 comporte une surface réfléchissante 10a ayant des génératrices droites dans le plan vertical transversal et pouvant avoir par exemple une forme tronconique.

La source 8 est placée latéralement par rapport aux surfaces réfléchissantes 9a et 10a. Le faisceau émis par la source 8 ayant un axe sensiblement horizontal dans un plan à mi-hauteur de l'habitacle est intercepté par les surfaces réfléchissantes 9a et 10a qui sont orientées de manière telle que la majeure partie du faisceau émis par la source 8 intercepté par la surface 9a et l'intégralité du faisceau intercepté par la surface 10a soient réfléchies par les surfaces 9a et 10a dans des directions faiblement inclinées par rapport à l'axe sensiblement horizontal du faisceau émis par la source 8. Un flux lumineux intense est donc transmis avec une faible inclinaison par rapport à l'horizontale, à travers la plaque transparente 13 fermant la cavité ménagée dans la garniture de la porte, dans laquelle est placé le dispositif d'éclairage 5. Une partie importante du flux lumineux émis par la source 8 (schématisé par la flèche 14 sur la figure 4) est donc transmise dans une partie de l'habitacle éloignée d'une zone située à la verticale de la source 8.

Le flux lumineux (schématisé par la flèche 15) parvenant dans une partie de l'habitacle proche de la zone située à la verticale de la source 8 provient d'une partie du faisceau émis par la source transmis directement à travers la plaque transparente 13 et d'une partie du faisceau émis par la source 8 et réfléchi par la surface 9a la plus éloignée de la source 8. Cette partie du faisceau transmis et réfléchi par la partie la plus éloignée de la surface réfléchissante 9a du réflecteur 9 dans la première partie de l'espace éclairé de l'habitacle transmet un flux lumineux sensiblement inférieur au flux lumineux transmis dans la seconde partie de l'espace éclairé de l'habitacle plus éloignée de la zone à la verticale de la source 8.

La courbure et/ou l'orientation des surfaces réfléchissantes 9a et 10a produit un effet similaire suivant la direction longitudinale du véhicule automobile, si bien que la seconde partie de l'espace éclairé de l'habitacle situées le plus loin de la source 8 reçoit un flux lumineux sensiblement supérieur au flux reçu par la première partie de l'espace éclairé la plus proche de la source 8..

Il en résulte une répartition plus homogène de l'éclairement, dans tout l'espace de l'habitacle du véhicule automobile éclairé par le dispositif selon l'invention.

L'éclairage de l'ensemble de l'habitacle du véhicule automobile peut être obtenu en utilisant plusieurs dispositifs d'éclairage tels que le dispositif 5 placés, de chaque côté de l'habitacle du véhicule, à droite et à gauche, soit dans des portes du véhicule automobile, soit dans des parois fixes, en des emplacements qui sont de préférence à un niveau correspondant à la mi-hauteur de l'habitacle du véhicule automobile, de manière à former plusieurs espaces éclairés adjacents.

Les utilisateurs du véhicule automobile disposent donc, dans toutes les parties de l'habitacle, de conditions d'éclairage pratiquement constantes, du fait de la répartition des flux lumineux produits par les dispositifs d'éclairage.

L'invention ne se limite pas strictement au mode de réalisation qui a été décrit.

C'est ainsi que les surfaces réfléchissantes des réflecteurs placés de part et d'autre de la source lumineuse, par exemple au-dessus et en dessous de la source lumineuse, peuvent avoir des formes géométriques différentes de celles qui ont été indiquées ci-dessus, à partir du moment où leur inclinaison et leur forme permettent de répartir le faisceau lumineux émis par la source de manière à produire un flux lumineux plus intense dans les parties de l'espace éclairé plus éloignées de la source et un flux lumineux moins intense dans les parties de l'espace éclairé plus proches de la source.

La source lumineuse peut être non seulement une diode émettrice de lumière LED associée à des moyens de production et de diffusion de lumière, mais encore toute autre source lumineuse connue telle qu'une ampoule électrique, dans la mesure où une telle source peut produire une intensité lumineuse suffisante sans produire de quantité excessive de chaleur, tout en étant d'une taille autorisant son insertion dans le boîtier d'un dispositif d'éclairage intérieur du véhicule automobile.

L'invention s'applique non seulement aux dispositifs d'éclairage disposés latéralement et à mi-hauteur dans le véhicule automobile, mais à d'autres types d'éclairage d'espaces du véhicule automobile s'étendant suivant la direction transversale et/ou la direction longitudinale du véhicule automobile.

## Revendications

1. Dispositif d'éclairage intérieur d'un habitacle d'un véhicule automobile (1), à répartition de flux lumineux, comportant au moins une source lumineuse (8) et au moins un moyen de réflexion (9, 10) d'au moins un faisceau (7) émis par la source (8) vers un espace éclairé de l'habitacle (2) s'étendant suivant la direction longitudinale et la direction transversale du véhicule automobile (1), d'un côté au moins d'une zone de l'habitacle (2) à la verticale de la source lumineuse, le moyen de réflexion (9, 10) comporte au moins une surface réfléchissante (9a, 10a) dirigée vers la source lumineuse (8) de forme courbe disposée par rapport à la source lumineuse (8) et orientée de manière que le faisceau réfléchi transmette un premier flux lumineux (15) dans une première partie de l'espace éclairé de l'habitacle (2) proche de la zone située à la verticale de la source lumineuse (8) et un second flux lumineux (14), dans une seconde partie de l'espace éclairé de l'habitacle (2) éloignée de la zone à la verticale de la source lumineuse (8) **caractérisé en ce que** le second flux lumineux (14) est plus intense que le premier flux lumineux (15).

2. Dispositif d'éclairage suivant la revendication 1, placé sensiblement à mi-hauteur de l'habitacle sur ou à l'intérieur d'une paroi latérale (3) de l'habitacle (2), **caractérisé par le fait qu'**il comporte un premier réflecteur (9) disposé au-dessus de la source (8) et un second réflecteur (10) situé en dessous de la source (8) assurant l'émission d'un faisceau lumineux ayant un axe sensiblement horizontal, le premier réflecteur (9) et le second réflecteur (10) ayant des surfaces réfléchissantes respectives (9a, 10a) destinées à intercepter le faisceau lumineux émis par la source (8) disposées et orientées de manière à transmettre, dans une première direction générale peu inclinée par rapport à l'horizontale, le premier flux lumineux (15) et, dans une seconde direction générale plus inclinée par rapport à l'horizontale, le second flux lumineux (14), le second flux lumineux (14) ayant une intensité lumineuse supérieure au premier flux lumineux (15).

3. Dispositif suivant la revendication 2, **caractérisé par le fait que** le premier réflecteur (9) ayant une surface réfléchissante (9a) courbe est disposé par rapport à la source (8) et orienté de manière à produire un premier et un second faisceaux lumineux réfléchis, le second faisceau lumineux réfléchi ayant une inclinaison faible par rapport à l'horizontale et transmettant un flux lumineux intense, et le premier faisceau réfléchi ayant une inclinaison plus forte par rapport à l'horizontale que le second faisceau réfléchi et transmettant un flux lumineux moins intense que le second faisceau réfléchi, et que le second réflecteur (10) présente une surface réfléchissante (10a) disposée par rapport à la source (8) et orientée de manière à produire un faisceau réfléchi ayant une faible inclinaison par rapport à l'horizontale.

4. Dispositif suivant l'une quelconque des revendications 2 et 3, **caractérisé par le fait que** le premier réflecteur (9) est disposé au-dessus de la source lumineuse (8) et le second réflecteur (10) en dessous de la source lumineuse (8).

5. Dispositif suivant la revendication 4, **caractérisé par le fait que** la surface réfléchissante (9a) du premier réflecteur (9) présente des sections courbes et la seconde surface réfléchissante (10a) du second réflecteur (10) des génératrices droites, dans des plans passant par l'axe du faisceau émis par la source (8).

6. Dispositif suivant la revendication 5, **caractérisé par le fait que** la surface réfléchissante (9a) du premier réflecteur (9) et la surface réfléchissante (10a) du second réflecteur (10) présentent des sections courbes dans des plans perpendiculaires à l'axe du faisceau émis par la source (8).

## Claims

1. Interior lighting device for the passenger compartment of a motor vehicle (1), with luminous flux distribution, comprising at least one light source (8) and at least one reflecting means (9, 10) for at least one beam (7) emitted by the source (8) towards an illuminated space of the passenger compartment, (2) extending in the longitudinal and transverse direction of the motor vehicle (1), on at least one side of a zone of the compartment (2) arranged vertically with respect to the light source, the reflecting means (9, 10) comprise at least one reflective surface (9a, 10a) directed towards the light source (8), curved in shape, arranged relative to the light source (8) and oriented so that the reflected beam transmits a first luminous flux (15) into a first part of the illuminated space of the compartment (2) close to the zone arranged vertically with respect to the light source (8), and a second luminous flux (14), in a second part of the illuminated space of the compartment (2) remote from the zone arranged vertically with respect to the light source (8), **characterised in that** the second luminous flux (14) is more intense than the first luminous flux (15).

2. Lighting device according to claim 1, placed substantially halfway up the compartment, on or inside a side wall (3) of the compartment (2), **characterised in that** it comprises a first reflector (9) arranged above the source (8) and a second reflector (10) arranged below the source (8), for emitting a light beam having a substantially horizontal axis, the first reflector (9) and the second reflector (10) having respective reflective surfaces (9a, 10a) adapted to intercept the light beam emitted by the source (8), which are arranged and oriented so as to transmit the first luminous flux (15), in a first general direction slightly inclined relative to the horizontal, and the second luminous flux (14), in a second general direction which is more inclined relative to the horizontal, the second luminous flux (14) having a light intensity which is greater than the first luminous flux (15).

3. Device according to claim 2, **characterised in that** the first reflector (9) having a curved reflective surface (9a) is arranged relative to the source (8) and oriented so as to produce a first and a second reflected light beam, the second reflected light beam being slightly inclined relative to the horizontal and transmitting an intense luminous flux, and the first reflected light beam being more greatly inclined relative to the horizontal than the second reflected beam and transmitting a less intense luminous flux than the second reflected beam, and the second reflector (10) has a reflective surface (10a) arranged relative to the source (8) and oriented so as to produce a reflected beam which is slightly inclined relative to the horizontal.

4. Device according to any one of claims 2 and 3, **characterised in that** the first reflector (9) is arranged above the light source (8) and the second reflector (10) is arranged below the light source (8).

5. Device according to claim 4, **characterised in that** the reflective surface (9a) of the first reflector (9) has curved sections and the second reflective surface (10a) of the second reflector (10) has straight generatrices, in planes passing through the axis of the beam emitted by the source (8).

6. Device according to claim 5, **characterised in that** the reflective surface (9a) of the first reflector (9) and the reflective surface (10a) of the second reflector (10) have curved sections in planes perpendicular to the axis of the beam emitted by the source (8).

## Patentansprüche

1. Innenbeleuchtungs-Vorrichtung einer Fahrgastzelle eines Kraftfahrzeugs (1) zur Lichtströmverteilung, aufweisend mindestens eine Lichtquelle (8) und mindestens ein Mittel zur Reflexion (9, 10) von mindestens einem von der Quelle (8) emittierten Bündel (7) hin zu einem sich in Längsrichtung und in Querrichtung des Kraftfahrzeuges (1) erstreckenden Beleuchtungsraum der Fahrgastzelle (2) von mindestens einer Seite einer Zone der Fahrgastzelle (2) an der Vertikalen der Lichtquelle, wobei das Reflexionsmittel (9, 10) mindestens eine Reflexionsfläche (9a, 10a) aufweist, die zu der Lichtquelle derart kurvenförmig ausgerichtet, bezüglich der Lichtquelle (8) angeordnet und orientiert ist, dass das reflektierte Bündel einen ersten Lichtstrom (15) in einen ersten Abschnitt des Beleuchtungsraums der Fahrgastzelle (2), der nahe der Zone ist, die an der Vertikalen der Lichtquelle (8) angeordnet ist, und einen zweiten Lichtstrom (14) in einen zweiten Abschnitt des Beleuchtungsraums der Fahrgastzelle (2) überträgt, der von der Zone der Vertikalen der Lichtquelle (8) abgelegen ist, **dadurch gekennzeichnet, dass** der zweite Lichtstrom (14) stärker als der erste Lichtstrom (15) ist.

2. Beleuchtungs-Vorrichtung gemäß Anspruch 1, die im wesentlichen auf halber Höhe der Fahrgastzelle an oder im Inneren einer Seitenwand (3) der Fahrtgastzelle (2) angeordnet ist, **dadurch gekennzeichnet, dass** sie einen ersten Reflektor (9), der über der Quelle (8) angeordnet ist, und einen zweiten Reflektor (10) aufweist, der sich unter der Quelle (8) befindet, was die Emission eines Lichtbündels mit einer im Wesentlichen horizontalen Achse sicherstellt, wobei der erste Reflektor (9) und der zweite Reflektor (10) jeweilige Reflexionsflächen (9a, 10a) haben, die zum Auffangen des von der Quelle (8) emittierten Lichtbündels vorgesehen, angeordnet und orientiert sind, so dass der erste Lichtstrom (15) in einer ersten Hauptrichtung, die etwas bezüglich der Horizontalen geneigt ist, und der zweite Lichtstrom (14) in einer zweiten Hauptrichtung übertragen wird, die bezüglich der Horizontalen stärker geneigt ist, wobei das zweite Lichtbündel (14) eine Lichtstärke hat, die stärker als die des ersten Lichtbündels (15) ist.

3. Vorrichtung gemäß Anspruch 2, **dadurch gekennzeichnet, dass** der erste Reflektor (9) eine kurvenförmige Reflexionsfläche (9a) hat und bezüglich der Quelle (8) so angeordnet und orientiert ist, dass ein erstes und ein zweites reflektiertes Lichtbündel erzeugt werden, wobei das zweite reflektierte Lichtbündel eine geringe Neigung bezüglich der Horizontalen hat und einen starken Lichtstrom überträgt, und wobei das erste reflektierte Bündel eine stärkere Neigung bezüglich der Horizontalen als das zweite reflektierte Bündel hat und einen weniger starken Lichtstrom als das zweite Bündel überträgt, und dass der zweite Reflektor (10) eine Reflexionsfläche (10a) aufweist, die bezüglich der Quelle (8) so angeordnet und orientiert ist, dass ein reflektiertes Bündel mit einer geringen Neigung bezüglich der Horizontalen erzeugt wird.

4. Vorrichtung gemäß einem der vorherigen Ansprüche 2 und 3, **dadurch gekennzeichnet, dass** der erste Reflektor (9) über der Lichtquelle (8) und der zweite Reflektor (10) unter der Lichtquelle (8) angeordnet ist.

5. Vorrichtung gemäß Anspruch 4, **dadurch gekennzeichnet, dass** die Reflexionsfläche (9a) des ersten Reflektors (9) Kurvenabschnitte und die zweite Reflexionsfläche (10a) des zweiten Reflektors (10) gerade Mantellinien in den Ebenen aufweist, die von der Achse des von der Quelle (8) emittierten Bündels passiert werden.

6. Vorrichtung gemäß Anspruch 5, **dadurch gekennzeichnet, dass** die Reflexionsfläche (9a) des ersten Reflektors (9) und die Reflexionsfläche (10a) des zweiten Reflektors (10) Kurvenabschnitte in den Ebenen senkrecht zur Achse des von der Quelle (8) emittierten Bündels aufweisen.
